# FASCICULE DE BREVET EUROPEEN

(11) **EP 2 590 828 B1**
(45) Date de publication et mention de la délivrance du brevet: **10.09.2014**
(21) Numéro de dépôt: 11735407.6
(22) Date de dépôt: 06.07.2011
(51) Int. Cl.: B60C 11/11, B60C 11/12

(54) **DISPOSITIF DE PROTECTION DE BANDE DE ROULEMENT**
REIFENPROFILSCHUTZ
TREAD PROTECTION DEVICE

(30) Priorité: 06.07.2010 FR 1055455
(43) Date de publication de la demande: 15.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: GAYTON, Christophe, F-63040 Clermont-Ferrand Cedex 09 (FR); ORAISON, Stéphane, F-63040 Clermont-Ferrand Cedex 09 (FR); QUANTINET, Benjamin, F-63040 Clermont-Ferrand Cedex 09 (FR); VANDAELE, Matthieu, F-63040 Clermont-Ferrand Cedex 09 (FR)
(74) Mandataire: Diernaz, Christian
(86) Numéro de dépôt international: PCT/EP2011/061369
(87) Numéro de publication internationale: WO 2012/004285

(56) Documents cités:
- EP-A1- 1 669 217
- EP-A2- 1 872 974
- FR-A1- 2 763 892
- JP-A- 2 189 203
- JP-A- 8 332 810
- JP-A- 9 323 511
- JP-A- 2002 347 413

## Description

### DOMAINE DE L'INVENTION

La présente invention concerne les pneus pour véhicules poids lourd et plus particulièrement les bandes de roulement de tels pneus.

### ÉTAT DE LA TECHNIQUE

Un pneu pour véhicule poids lourd comprend une bande de roulement dont la surface radialement à l'extérieur forme une surface de roulement destinée à venir en contact avec une chaussée pendant le roulage. Cette bande de roulement est pourvue, de manière connue, de rainures formant dans le contact avec la chaussée des volumes aptes à drainer l'eau présente sur une chaussée par temps de pluie. Ces rainures ont une profondeur correspondant sensiblement à l'épaisseur de bande à user et délimitent des éléments en relief qui se présentent sous la forme de blocs ou de nervures. Chaque élément en relief comprend une face de contact formant une partie de la surface de roulement de la bande de roulement et des parois latérales coupant cette face de contact selon des arêtes.

Pour augmenter la performance d'adhérence de ces bandes sans trop réduire leur rigidité, il est connu de pourvoir les éléments de relief avec des incisions qui présentent l'avantage de pouvoir, au moins en partie, se fermer au passage dans le contact avec la chaussée. Chaque incision a une profondeur au moins égale à 50% de la profondeur des rainures et a une largeur, correspondant à la distance entre les faces en vis-à-vis la délimitant, qui est inférieure à la largeur des rainures afin précisément de permettre leur mise en contact.

Dans le présent document, une rainure a une largeur au moins égale à 2 mm et une incision une largeur inférieure à 2 mm.

Chaque incision coupe une face de contact de l'élément de relief selon deux arêtes. Ces arêtes sont particulièrement utiles lorsque la bande de roulement est neuve, c'est-à-dire qu'elle n'a pas encore roulé. En effet, elles participent activement à l'adhérence à l'état neuf.

Les demanderesses ont constaté que dans des conditions particulièrement sévères d'utilisation, le matériau de la bande de roulement situé au voisinage de certaines arêtes formées par les incisions pouvait subir de petits arrachements réduisant la performance de ces arêtes et pouvant être la cause de la formation d'une usure plus prononcée localement (dite usure "irrégulière") qui se prolonge au cours de l'utilisation du pneu.

### Définitions :

Plan médian équatorial : c'est un plan perpendiculaire à l'axe de rotation et passant par les points du pneu radialement les plus éloignés dudit axe.

Un bloc est un élément en relief formé sur la bande de roulement qui est délimité par des creux ou rainures et comprenant des parois latérales et une face de contact destinée à venir en contact avec la chaussée.

Une découpure peut être soit une incision soit une rainure soit une combinaison d'incision et de rainure.

Une incision correspond à un espace compris entre deux parois de matière distantes l'une de l'autre de façon à pouvoir être en contact au moins partiel dans les conditions d'usage d'un pneu.

Une rainure correspond à un espace compris entre deux parois de matière ne venant pas en contact l'une sur l'autre

Par direction radiale, on entend dans le présent document une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est perpendiculaire à la fois à la direction axiale et à une direction radiale et qui est tangente à tout cercle centré sur l'axe de rotation.

Des pneumatiques dont la bande de roulement comporte des incisions sont décrits dans les documents JP-A-08332810, EP-A-1669217, JP-A-02189203, JP-A-09323511 et JP-A-2002347413.

### BREF EXPOSÉ DE L'INVENTION

La présente invention vise à éviter la formation d'arrachements de matière au voisinage des incisions formées sur une bande de roulement de pneu pour véhicule poids lourd et ainsi éviter la génération d'une usure irrégulière de la bande de roulement.

Par épaisseur totale d'une bande de roulement il faut ici comprendre l'épaisseur totale de la bande qui peut être usée avant d'avoir à renouveler cette bande soit par rechapage soit par changement de pneu.

A cet effet, l'invention a pour objet un pneu, tel que défini dans la revendication 1, comportant une bande de roulement pourvue avec des rainures de profondeur au plus égale à l'épaisseur E de la bande, ces rainures délimitant des éléments de relief comme des nervures ou des blocs. Chaque élément de relief comporte une face de contact formant une partie de la surface de roulement de la bande et des faces latérales coupant la face de contact pour former des arêtes des éléments de relief. En outre, au moins un de ces éléments de relief comprend au moins une découpure s'ouvrant sur la face de contact d'un l'élément de relief pour former des arêtes, cette découpure se prolongeant dans l'élément de relief sur une profondeur totale H au plus égale à l'épaisseur E de la bande, cette découpure se présentant, entre la face de contact et une profondeur H1 au plus égale à la profondeur totale H, sous la forme d'une incision ayant une largeur D appropriée pour pouvoir se fermer au moins en partie pour des conditions usuelles de roulage du pneu. Ce pneu est caractérisé en ce qu'au voisinage d'au moins une arête de cette découpure sur la surface de roulement, c'est-à-dire à une distance au plus égale à cinq fois la largeur D de l'incision, il est formé une pluralité de cavités ayant une profondeur h petite comparativement à la profondeur totale H de la découpure, c'est-à-dire ayant une profondeur h au plus égale à 30% de la profondeur totale H, ces cavités diminuant la rigidité de compression de la bande de roulement au voisinage de ladite au moins une arête.

Les cavités, ainsi formées au voisinage de chaque arête d'une découpure en modifiant localement (c'est-à-dire au plus près des arêtes de l'incision), réduisent la sensibilité de cette découpure contre des arrachements de matière liés à d'éventuelles agressions en roulage.

Par « au voisinage des arêtes d'une découpure », il faut comprendre qu'au moins certaine des cavités sont formées sur la surface de roulement ou la face de contact de l'élément sur une région s'étendant sur toute ou quasiment toute la longueur de la découpure et de chaque côté de ladite découpure. On trouve au moins une cavité sur une zone de largeur L1 mesurée par rapport à chaque arête. Cette largeur est choisie relativement faible (au plus égale à 5 fois la largeur D de l'incision) afin d'obtenir l'effet escompté. Au delà de cette largeur l'effet d'assouplissement de l'arête n'est pas suffisant pour avoir un effet sur la résistance à des agressions en roulage.

De façon préférentielle, la largeur totale de la région sur laquelle sont formées les cavités est au plus égale à trente fois la largeur D de la découpure sur la surface de roulement.

Grâce à la présence de ces petites cavités de surface situées au voisinage de chacune des arêtes d'une incision, on génère un assouplissement très localisé de l'élément de relief qui se révèle favorable afin de mieux résister à des sollicitations d'arrachement de matière sans perturber le fonctionnement desdites arêtes.

Cette invention est applicable à des découpures orientées transversalement ou bien circonférentiellement ou encore selon une direction oblique par rapport la direction transversale.

Selon un mode de réalisation préférentiel, la profondeur des cavités est au plus égale à 15% de la profondeur H des découpures.

Selon un mode de réalisation préférentiel, ces cavités ont la forme de petites rainures de profondeur préférentiellement au plus égale à 2 mm voire encore plus préférentiellement au plus égale à 1 mm.

Selon un mode de réalisation préférentiel, les petites rainures sont orientées parallèlement les unes aux autres sur un même côté d'une arête. Dans une autre variante, ces petites rainures peuvent être orientées parallèlement aux arêtes de la découpure.

Selon un mode de réalisation préférentiel, ces cavités ont la forme de trous cylindriques de faible profondeur devant la profondeur totale des découpures, pour former sur la face de contact une arête de tracé fermé qui peut être de forme circulaire ou sensiblement circulaire ou rectangulaire ou triangulaire. Les cavités peuvent avoir une forme tronconique (dans ce cas il y a un angle de dépouille au plus égal à 10 degrés) et de faible profondeur devant la profondeur totale des découpures, c'est-à-dire au plus 30% de ladite profondeur. La profondeur des cavités est préférentiellement au plus égale à 2 mm et encore plus préférentiellement au plus égale à 1 mm. Dans le cas de trous, il est formé au voisinage de chaque arête d'une incision au moins une rangée de trous, cette au moins une rangée étant parallèle à une desdites arêtes.

Selon un autre mode de réalisation préférentiel, les cavités ont la forme d'une pluralité de rainures orientées parallèlement les unes aux autres. Par rainure, on entend ici une cavité de forme générale allongée, c'est-à-dire présentant une très grande dimension comparativement aux autres dimensions de la même rainure (d'un facteur au moins égal à 10).

Avantageusement, chaque cavité ayant la forme d'une rainure est orientée parallèlement aux arêtes de la découpure que l'on souhaite protéger.

Selon un autre mode de réalisation de l'invention, les cavités ont la forme d'une pluralité de rainures orientées parallèlement entre elles et de façon à faire un angle différent de zéro degré avec la direction des arêtes de l'incision. Cet angle est préférentiellement au moins égal à 45 degrés.

Selon un autre mode de réalisation de l'invention, la découpure a la forme d'une incision se prolongeant à l'intérieur de la bande par un canal d'une largeur maximale K destiné après une usure partielle de la bande de roulement à former une nouvelle rainure en surface. Dans une telle configuration, il est judicieux que la zone sur laquelle sont formées les cavités de chaque côté de la découpure soit au moins de largeur égale à 50% de la largeur maximale K. Cette largeur de la zone sur laquelle sont formées les cavités est mesurée perpendiculairement à l'arête que l'on cherche à protéger.

Selon un autre mode de réalisation de l'invention, l'une ou l'autre des variantes présentées dans le présent document peut être encore améliorée en combinant la présence d'au moins une cavité au voisinage d'au moins une arête d'une découpure avec la présence d'un chanfrein sur au moins une arête d'une découpure. Par chanfrein, on entend une partie de petite hauteur par rapport à la profondeur de la découpure (c'est à dire sur une profondeur au plus égale à 10% de la profondeur de la découpure) et faisant un angle moyen inférieur à 90 degrés avec la surface de roulement. Préférentiellement, cet angle moyen est proche de ou égal à 45 degrés. La géométrie de chaque chanfrein peut être plane ou courbe.

La présence d'un chanfrein génère entre l'arête de la découpure et l'une des parois de ladite découpure une partie inclinée. Il peut être intéressant de former sur cette partie inclinée au moins une cavité sous forme d'au moins une rainure orientée parallèlement à l'arête de la découpure.

Avantageusement, au moins une arête d'une découpure est pourvue avec un chanfrein, ce chanfrein se prolongeant sur la surface de roulement par la présence d'au moins une cavité ayant une profondeur au plus égale à 30% de la profondeur totale H de la découpure et destinée à diminuer la rigidité de compression de la bande au voisinage dudit chanfrein. Des cavités semblables à celles formées sur la surface de roulement peuvent en outre être formées sur chaque chanfrein.

Avantageusement, les cavités peuvent être de dimensions variables en partant d'une arête de la découpure et en allant vers le bord de l'élément de relief situé du même côté que ladite arête. Notamment, il est possible de moduler l'assouplissement de l'élément de relief en fonction de la variation des dimensions des cavités.

Par exemple, il est possible de disposer, au plus près d'une arête formée par une découpure, des cavités ayant des dimensions variant avec la distance par rapport aux arêtes. Il est ainsi possible de prévoir une variation de la profondeur ou de la largeur (pour des rainures) ou du diamètre (pour des trous de forme cylindrique) des cavités afin d'obtenir un effet d'assouplissement progressif.

Ainsi on peut réaliser un plus grand assouplissement au plus près des arêtes en formant des cavités qui ont des profondeurs croissantes en allant vers chaque arête de la découpure. Dans un autre mode de réalisation, on peut augmenter la densité de cavités en se rapprochant de chaque arête ; par densité de cavités, on entend un volume de cavités par unité de surface. Dans une variante intéressante, les cavités sont disposées avec des distances entre cavités qui sont fonction de la distance de ces cavités par rapport aux arêtes de la découpure.

Selon un perfectionnement de l'invention, la bande de roulement d'un pneu selon l'invention comprend une pluralité d'éléments de relief, au moins un de ces éléments de relief étant pourvu avec au moins une découpure formant sur la face de contact de l'élément de relief deux arêtes. Ces arêtes sont pourvues à leur voisinage, c'est-à-dire à une distance au plus égale à cinq fois la largeur D de la découpure, avec au moins une cavité principale pour réaliser un assouplissement de l'élément de relief au voisinage de chaque arête de la découpure. En outre, cet élément de relief comprend une pluralité de cavités additionnelles formées de part et d'autre de chaque cavité principale, la densité de ces cavités additionnelles étant plus grande dans la partie médiane de la découpure, ce qui correspond sensiblement à la partie centrale de l'élément de relief. De façon pratique, les cavités additionnelles sont formées de façon à ce qu'elles soient suffisamment éloignées des bords de l'élément de relief pour ne pas modifier les rigidités de compression desdits bords et afin de modifier ces mêmes rigidités dans la partie centrale.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 montre une bande de roulement d'un pneu pour poids lourd selon l'invention, cette bande comprenant une pluralité de nervures orientées circonférentiellement ;
La figure 2 montre vue en coupe selon la ligne II-II, une nervure de la bande de roulement montrée à la figure 1 ;
La figure 3 montre une vue en coupe d'une variante de pneu selon l'invention, les découpures comportant une partie interne formant un canal ;
Les figures 4A et 4B montrent deux variantes de l'invention mettant en oeuvre des petites incisions au voisinage des arêtes d'une découpure ;
La figure 5 montre une autre variante de l'invention mettant en oeuvre une pluralité de trous au voisinage d'une découpure ;
La figure 6 montre une variante de l'invention selon laquelle la profondeur des cavités varie avec la distance à la découpure ;
La figure 7 montre une variante selon laquelle les arêtes de la découpure sont prolongées vers la découpure par une partie formant chanfrein, ce chanfrein étant également pourvu de cavités ;
La figure 8 montre un bloc d'une bande de roulement selon l'invention, ce bloc comprenant une incision d'orientation générale transversale ;
La figure 9 montre un bloc d'une bande de roulement selon l'invention, ce bloc comprenant une incision d'orientation générale transversale, cette incision comprenant plusieurs parties d'orientations différentes ;
La figure 10 montre deux rangées de blocs s'étendant dans la direction circonférentielle d'une variante de bande de roulement selon l'invention.

### DESCRIPTION DES FIGURES

Pour rendre plus aisée la lecture des figures, des mêmes signes de référence peuvent être employés pour la description de variantes de l'invention dès lors que ces signes de référence renvoient à des éléments d'une même nature qu'elle soit structurelle ou bien fonctionnelle.

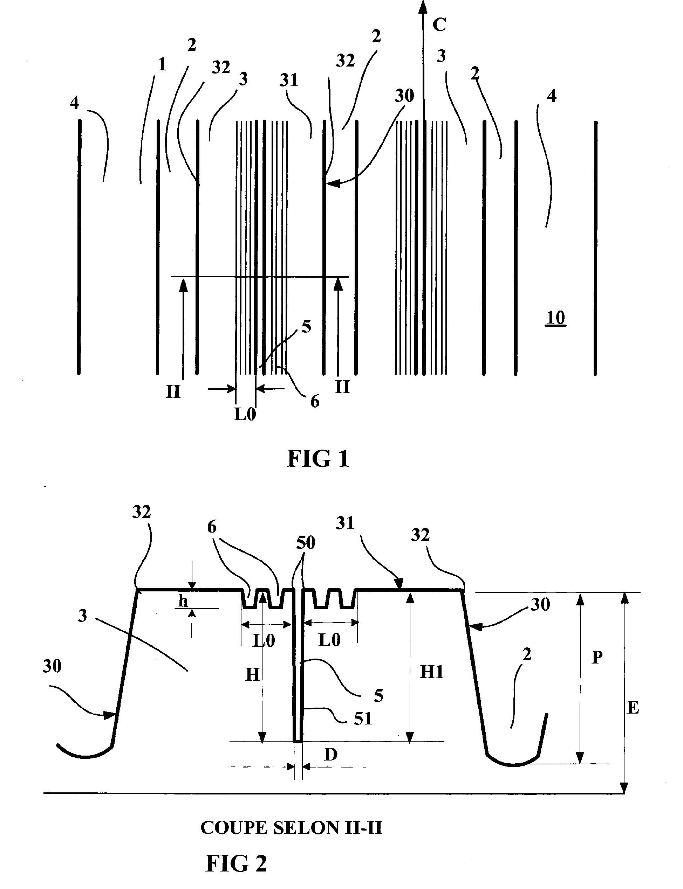

La figure 1 montre une vue partielle de la surface de roulement d'une bande de roulement 1 selon l'invention pour pneu de dimension 265/55R17.5 équipant un véhicule poids lourd. Cette bande de roulement comprend trois rainures circonférentielles 2 délimitant deux nervures intermédiaires 3 (de largeur 64 mm) et des nervures de bord 4 (de largeur 40 mm) délimitant axialement la bande de roulement. La bande de roulement 1 a une épaisseur totale E égale à 17.5 mm et les rainures circonférentielles 2 ont une profondeur P qui est au plus égale à cette épaisseur totale E (dans le cas présent cette profondeur P des rainures est égale à 14.5 mm).

La bande de roulement 1 comprend une surface de roulement 10 destinée à venir en contact avec la surface d'une chaussée pendant le roulage. Chaque nervure intermédiaire 3 comprend une face radialement à l'extérieur qui forme une face de contact 31 et forme une partie de la surface de roulement. Chaque nervure intermédiaire 3 comprend des faces latérales 30 coupant la face de contact 31 selon des arêtes 32 orientées circonférentiellement. La largeur axiale (ou transversale) de chaque nervure correspond à la distance séparant ces arêtes.

En outre, les deux nervures intermédiaires 3 sont pourvues chacune avec une découpure 5 orientée circonférentiellement. Sur cette figure 1, la direction circonférentielle est indiquée par une flèche C.

Comme cela est visible sur la figure 2, montrant une coupe selon une ligne II-II prise sur la figure 1, on voit que cette découpure 5 de profondeur totale H, au plus égale à l'épaisseur E de la bande de roulement, a la forme d'une incision de largeur moyenne 0.6 mm s'ouvrant sur la face de contact 31 de la nervure 3. Par incision on entend ici une découpure dont les parois peuvent venir en partie ou en totalité en contact l'une contre l'autre pendant le roulage.

Cette découpure 5 coupe la face de contact 31 de la nervure intermédiaire 3 pour former deux arêtes 50 qui dans le cas présent sont parallèles aux arêtes 32 limitant axialement ladite nervure.

Pour améliorer la résistance de chaque nervure intermédiaire 3 au voisinage des arêtes 50 formées par les découpures 5, il est formé sur la face de contact 31 et au voisinage de chacune desdites arêtes une pluralité de cavités ayant dans le cas présent la forme de rainures superficielles 6 de faible profondeur moyenne égale à 0.6 mm et une largeur sensiblement égale à 0.6 mm. Dans une bande de largeur L0 (ici égale à cinq fois la largeur 0.6 mm, soit 3 mm) à partir de chaque arête 50, il est formé deux rainures superficielles 6 qui sont dans le cas présent parallèles entre elles ainsi qu'aux arêtes 50 de l'incision (elles sont donc orientées dans la direction circonférentielle). À noter que pour faciliter la compréhension des figures les échelles n'ont pas été respectées sur ces figures pour ce qui concerne les dimensions relatives ; notamment les largeurs des zones pourvues avec les rainures superficielles 6 ont été amplifiées.

Cet exemple de réalisation n'est bien entendu pas limitatif en soi ; en effet les découpures peuvent être présentes sur quelques nervures voire sur toutes et on peut être amené à prévoir de semblables petites rainures superficielles au voisinage des arêtes formées par lesdites découpures.

L'exemple présenté avec la figure 1 et la figure 2 montre des découpures sensiblement rectilignes dans la direction circonférentielle : la même invention s'applique au cas de découpures ondulées ou en zigzag quelle que soit leur orientation générale.

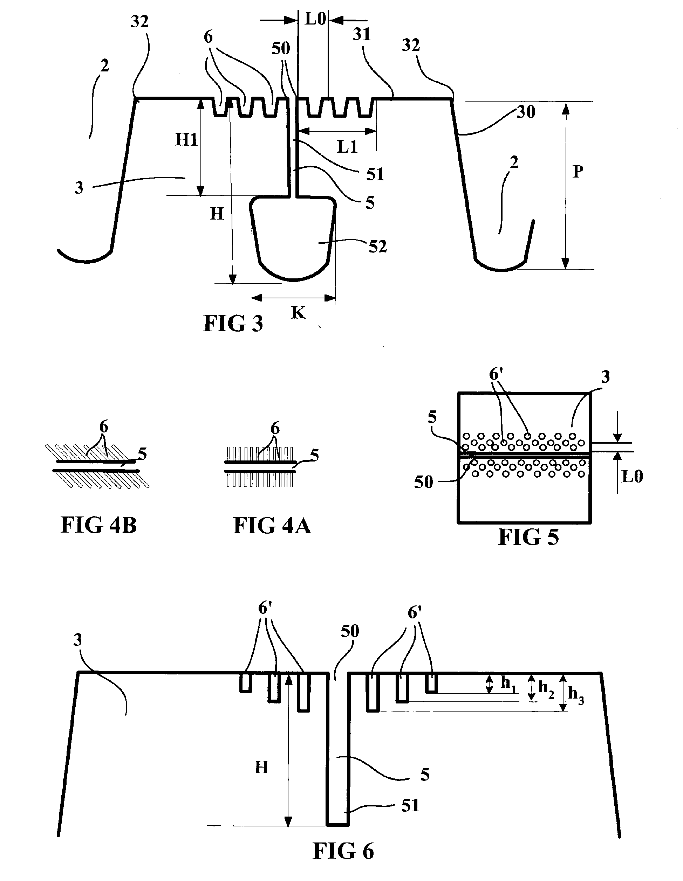

La figure 3 montre une vue en coupe d'une variante de pneu selon l'invention, une découpure comportant une partie interne formant un canal 52 destiné après usure partielle à former une nouvelle rainure sur la surface de roulement. Selon cette variante, la découpure 5 est formée d'une incision 51 de largeur 0.6 mm s'ouvrant sur la surface de roulement à l'état neuf, cette incision 51 se prolongeant par un élargissement formant un canal 52 de largeur axiale maximale K (dans le cas présent égale à 7.2 mm). Ce canal est de forme trapézoïdale et a une hauteur égale à 7.2 mm.

Pour améliorer la résistance de chaque nervure au voisinage des arêtes formées par les incisions, il est formé au voisinage de chacune desdites arêtes, c'est-à-dire au moins dans une bande de largeur égale à cinq fois la largeur des incisions, une pluralité de cavités ayant dans le cas présent la forme de rainures de profondeur moyenne égale à 0.6 mm et de largeur sensiblement 0.6 mm. Ces petites rainures sont parallèles aux arêtes 50 de l'incision. Au moins une de ces rainures est formée dans une bande de largeur L0 ; d'autres rainures sont en outre formées entre L0 et une largeur L1 au moins égale au quart de la largeur maximale K du canal 52 (dans le cas présent la largeur L1 est égale à la largeur maximale K).

Les figures 4A et 4B montrent deux variantes de l'invention mettant en oeuvre des petites incisions 6 au voisinage des arêtes d'une découpure 5. Par petites incisions 6, on entend ici que ces incisions ont une longueur petite et font un angle différent de zéro degré avec la direction des arêtes de la découpure. La figure 4A montre une pluralité de petites incisions 6 perpendiculaires à la direction des arêtes de la découpure. La figure 4B montre une variante selon laquelle les petites incisions ont toutes une même inclinaison que ce soit d'un côté ou de l'autre de la découpure 5. Ces mêmes incisions pourraient bien sûr avoir des inclinaisons différentes d'un côté par rapport à l'autre.

Les figures 5 et 6 montrent des variantes de l'invention mettant en oeuvre une pluralité de trous au voisinage d'une découpure. Par trou, on entend une cavité dont l'ouverture sur la surface de roulement a un contour fermé.

La figure 5 montre une variante de l'invention mettant en oeuvre une pluralité de trous 6' au voisinage d'une découpure 5 formée dans un bloc 3 de matière. Chaque trou 6' a une forme cylindrique circulaire de profondeur égale à 1 mm et un diamètre égal à 0.6 mm. La distance entre deux trous est égale à 0.6 mm. Ces trous 6' sont disposés sur des lignes parallèles entre elles et en quinconce afin de réaliser un assouplissement assez homogène au voisinage des arêtes formées par la découpure 5 sur la face de contact. Bien entendu, ces mêmes trous peuvent être disposés selon des arrangements différents par exemple sans être en quinconce. Dans le cas montré, au moins une rangée de trous est disposée sur une bande de largeur L0 ici égale à 1 mm, cette bande étant limitée sur un côté par une arête 50 de la découpure 5.

La figure 6 montre une coupe d'un élément de relief 3 d'une bande, cet élément de relief comprenant une découpure 5 formant des arêtes 50 sur la face de contact. De part et d'autre de cette découpure 5 sont prévus des trous 6' dont les profondeurs h1, h2, h3 varient en fonction de la distance par rapport à ladite découpure. Dans le cas présent, la profondeurs des trous va en augmentant plus les trous sont proches de la découpure. La profondeur la plus grande h3 pour ces trous 6' est égale à 1.5 mm tandis que la plus faible h1 est égale à 0.5 mm. La distance moyenne entre les trous de profondeurs différentes est égale à 0.5 mm. Il est ainsi réalisé un assouplissement plus important au voisinage proche des arêtes de cette découpure et une progressivité de la rigidité en surface en s'éloignant desdites arêtes. Cette même progressivité peut être appliquée au cas des cavités réalisées sous la forme de rainures.

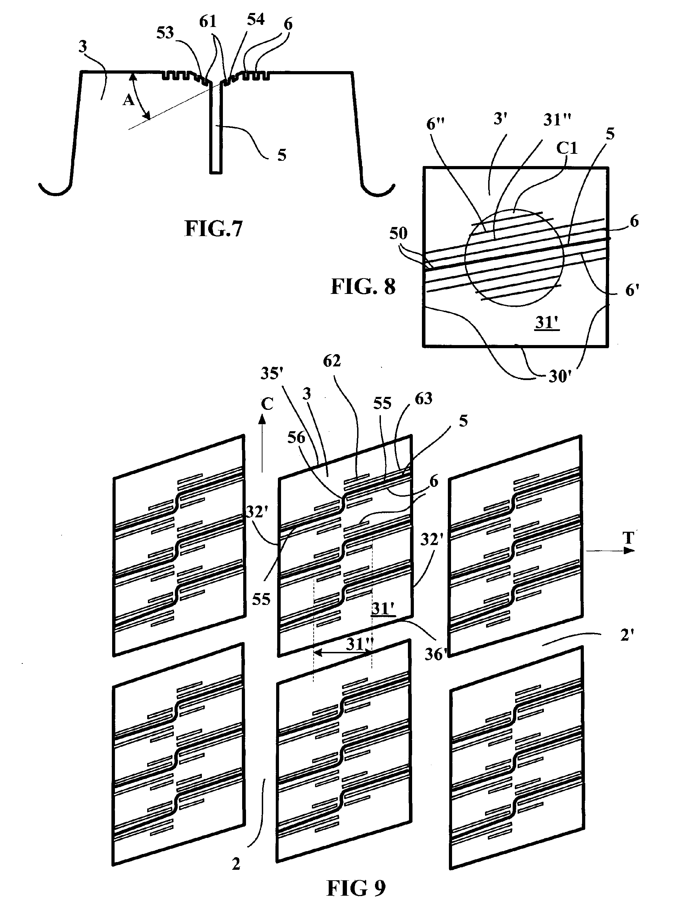

La figure 7 montre une variante selon laquelle les arêtes de la découpure 5 sont prolongées vers la découpure par des chanfreins 53, 54, ces chanfreins étant également pourvu de cavités 61 de faible profondeur. Chaque chanfrein forme une partie plane inclinée d'un angle égal à 45 degrés avec une perpendiculaire à la surface de roulement (et dans le cas présent à la direction de la découpure). Chaque chanfrein s'étend sur une distance égale à 2 mm mesurée perpendiculairement à la surface de roulement.

Selon cette variante et grâce à la présence d'un chanfrein sur chaque paroi de la découpure, les arêtes formées par ladite découpure sur la surface de roulement se rapprochent l'une de l'autre au cours de l'usure de la bande de roulement. Grâce à la présence de petites cavités (dans le cas présent des petites rainures) à la fois sur la surface de roulement et sur la partie chanfreinée, il est possible d'éviter tout phénomène d'arrachement de matière que ce soit sur la surface de roulement ou sur le chanfrein.

La figure 8 montre un bloc 3' d'une bande de roulement selon l'invention, ce bloc comprenant une incision 5 traversant en totalité ledit bloc pour former deux arêtes 50 sur la face de contact 31' du bloc, cette face de contact étant elle même limitée par des arêtes 30". Pour protéger localement le bloc au voisinage des arêtes 50 formées par l'incision 5, il est formé par moulage sur la face de contact 31' et au voisinage de ces deux arêtes 50 une pluralité de petites cavités 6 (sous forme de rainures de faible largeur, c'est-à-dire de largeur inférieure à 1 mm), la densité de ces cavités 6 étant plus importante dans la partie centrale 31" du bloc (c'est-à-dire sensiblement au voisinage du milieu des arêtes de l'incision 5). Par densité de cavités plus importante, il comprendre que le volume de cavités par unité d'aire de la face de contact est supérieur dans la partie centrale comparativement au volume de cavité des autres parties et notamment aux parties proches des bords du blocs. On distingue sur cette figure 8, la présence de rainures principales 6' de petite largeur s'étendant parallèlement à l'incision 5 et sur toute la longueur de cette incision 5. Dans une partie centrale - délimitée par un cercle C1 centré sur l'intersection des diagonales de la face de contact - des rainures additionnelles 6" sont formées ; ces rainures additionnelles 6" sont entièrement situées dans ce cercle C1 et sont parallèles aux rainures principales 6'. Dans une variante non représentée, ces rainures additionnelles 6" pourraient avoir une toute autre orientation.

La figure 9 montre un bloc 3 délimité par des rainures circonférentielles 2 et transversales 2'. La direction circonférentielle est indiquée par la flèche C tandis que la direction transversale est indiquée par la flèche T sur cette figure. Ce bloc 3 comprend une face de contact 31' délimitée par des arêtes avant et arrière 35', 36' et des arêtes latérales 32'.

Ce bloc 3 est pourvu avec une découpure 5 d'orientation générale transversale. Dans le cas décrit, cette découpure forme sur la face de contact 31' du bloc trois parties : deux parties d'extrémité 55 sensiblement parallèles aux arêtes avant 35' et arrière 36' du bloc et une partie intermédiaire 56 reliant entre elles les parties d'extrémité 55. Ces deux parties d'extrémité 55 débouchent chacune sur un bord latéral de ce bloc. La partie intermédiaire a une orientation sensiblement parallèle aux bords latéraux du bloc (et en conséquence sensiblement perpendiculaire aux arêtes avant et arrière du bloc). Selon cette variante de réalisation de l'invention, les parties d'extrémité 55 sont protégées par la mise en place de petites rainures 63 au voisinage des arêtes desdites parties d'extrémité. Ces petites rainures 63 sont dans le cas présent parallèles auxdites parties d'extrémité 55. En outre, il est prévu une plus forte densité de petites rainures au voisinage du raccordement de chaque partie d'extrémité avec la partie de liaison de façon à créer un assouplissement plus important de la matière vers la partie centrale 31" du bloc 3. Pour cela, il est prévu des petites rainures 62 parallèles aux petites rainures 63 mais de longueur inférieure à ces petites rainures 63.

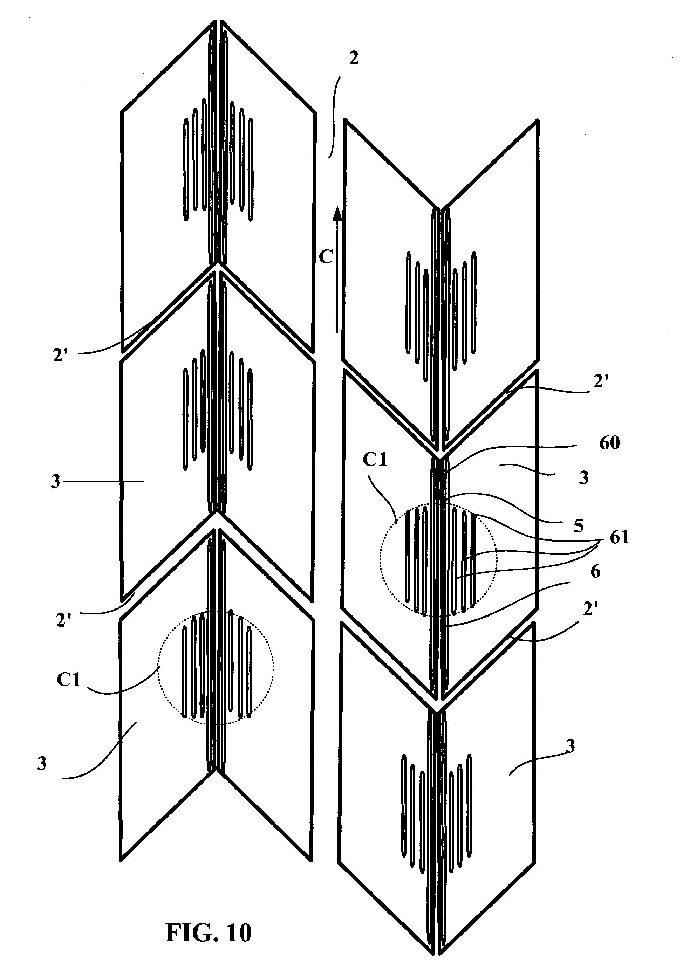

La figure 10 montre une autre variante de bande de roulement selon l'invention. Cette figure montre un ensemble de deux rangées d'éléments de relief s'étendant dans la direction circonférentielle (cette direction est indiquée par la flèche C). Ces deux rangées sont séparées l'une de l'autre par une rainure 2 circonférentielle. Chaque rangée comprend une pluralité d'éléments de relief 3 séparés les uns des autres dans la direction circonférentielle par une découpure 2' ayant dans le cas présent une largeur inférieure à la largeur de la rainure circonférentielle 2. Ces découpures 2' s'apparentent ici à des incisions c'est-à-dire que les parois des éléments de relief de part et d'autre de chaque incision viennent en contact lors du roulage.

En outre, chaque élément de relief 3 est pourvu avec une incision 5 orientée circonférentiellement, cette incision 5 s'ouvrant à ses deux extrémités dans les découpures 2'.

Afin d'augmenter la résistance mécanique des éléments de relief et tout particulièrement les arêtes de l'incision 5, il est formé, au voisinage de chacune de ces arêtes, une cavité principale 60 qui dans le cas présent s'étend sur toute la longueur circonférentielle de l'élément de relief. En outre, il est formé une pluralité de cavités additionnelles 61 localisées en totalité dans la partie centrale C1 de l'élément de relief pour compléter l'assouplissement réalisé par les cavités 60 les plus proches des arêtes de l'incision 5. Par localisées en totalité dans la partie centrale C1 d'un élément de relief 3, il faut entendre ici que les cavités additionnelles 61 sont placées à l'intérieur d'un cercle virtuel tel que montré très schématiquement sur la figure, ce cercle étant à une distance non nulle des bords de l'élément de relief (ce cercle est centré sur le milieu de l'incision 5 prise dans sa longueur circonférentielle).

Une autre variante, non représentée ici, peut avantageusement compléter la variante montrée avec la figure 10. Selon cette autre variante on peut former, le long des arêtes formées par les découpures 2' délimitant les éléments de relief 3, les mêmes cavités que celles formées le long des arêtes de l'incision 5.

Dans la variante montrée avec la figure 10, les cavités sont apparentées à des incisions de largeur égale à 0.6 mm et sont réalisées par moulage lors de la phase de moulage de la bande de roulement.

Bien entendu, l'invention n'est pas limitée aux exemples décrits et représentés et diverses modifications peuvent y être apportées sans sortir du cadre défini par les revendications. Par exemple, lorsque une bande de roulement comprend des cavités s'ouvrant sur la surface de roulement, ces cavités ayant sur ladite surface un contour fermé (c'est-à-dire formant une seule arête de tracé continu), il est dans l'esprit de l'invention de pourvoir une région entourant cette arête avec une pluralité de cavités de faible profondeur pour générer un assouplissement en surface au voisinage de cette arête et ainsi la protéger contre des arrachements de matière. En outre, la personne du métier est à même de combiner les diverses variantes décrites ici selon l'objectif à atteindre.

Les exemples décrits dans ce texte ne sauraient limiter les découpures à des découpures perpendiculaires à la surface de roulement de la bande de roulement : il est bien entendu possible d'appliquer l'invention au cas de découpures faisant un angle différent de 90 degrés avec la surface de roulement. De même, il est possible de réaliser un assouplissement plus important sur un côté d'une découpure que sur l'autre côté, soit en ne formant des cavités que sur un côté soit en formant davantage de cavités d'un côté que de l'autre.

## Revendications

1. Pneu à armature de carcasse radiale surmontée d'une ceinture de renforcement, cette dernière étant surmontée radialement à l'extérieur par une bande de roulement (1) d'épaisseur E, cette bande de roulement (1) ayant une surface de roulement pour venir en contact avec une chaussée et étant pourvue avec des rainures (2) de profondeur P au plus égale à l'épaisseur E de la bande, ces rainures (2) délimitant des éléments de relief (3), chaque élément de relief comportant une face de contact (31) formant une partie de la surface de roulement de la bande et des faces latérales (30) coupant la face de contact pour former des arêtes (32), une pluralité de ces éléments de relief (3) comprenant au moins une découpure (5) s'ouvrant sur la face de contact (31) d'un l'élément de relief pour former des arêtes (50) divisant l'élément en deux parties, cette découpure (5) se prolongeant dans l'élément de relief sur une profondeur totale H au plus égale à l'épaisseur E de la bande, cette découpure (5) se présentant, entre la face de contact (31) et une profondeur H1 au plus égale à la profondeur totale H, sous la forme d'une incision (51) ayant une largeur D appropriée pour pouvoir se fermer au moins en partie pour des conditions usuelles de roulage du pneu, ce pneu étant **caractérisé en ce qu'**il est formé, au voisinage de chaque arête de chaque découpure sur la face de contact, une pluralité de cavités (6) ayant une profondeur h petite comparativement à la profondeur de la découpure, c'est-à-dire au plus égale à 30% de la profondeur H, ces cavités (6) diminuant la rigidité de compression de l'élément de relief (3) au voisinage de ladite au moins une arête (50), ces cavités étant formées au plus près des arêtes, c'est-à-dire à une distance de chaque arête au plus égale à cinq fois la largeur D de la découpure, et **en ce que** la densité de cavités (6) est plus grande au voisinage de chaque découpure que sur le reste de l'élément de relief.

2. Pneu selon la revendication 1 **caractérisé en ce que** la profondeur h de chaque cavité (6) est au plus égale à 15% de la profondeur totale H de la découpure (5).

3. Pneu selon la revendication 1 ou la revendication 2 **caractérisé en ce que** chaque cavité (6) formée sur la face de contact a une arête (66) de tracé fermé et **en ce que** une pluralité de cavités (6) sont disposées selon une ligne parallèle à cette arête pour être au plus près de cette arête c'est-à-dire à une distance au plus égale à cinq fois la largeur D de la découpure.

4. Pneu selon la revendication 1 ou la revendication 2 **caractérisé en ce que** les cavités (6) ont la forme d'une pluralité de rainures orientées parallèlement les unes aux autres.

5. Pneu selon la revendication 4 **caractérisé en ce que** chaque cavité (6) est une rainure orientée parallèlement aux arêtes (50) de la découpure (5).

6. Pneu selon la revendication 4 **caractérisé en ce que** les cavités (6) ont la forme d'une pluralité de rainures, ces rainures étant orientées parallèlement entre elles et de façon à faire un angle au moins égal à 45 degrés avec les arêtes (50) de la découpure (5).

7. Pneu selon l'une des revendications 1 à 6 **caractérisé en ce que** la découpure (5) a la forme d'une incision (51) se prolongeant à l'intérieur de la bande par un canal (52) d'une largeur maximale K et **en ce que** la zone sur laquelle on forme les cavités de chaque côté de la découpure a une largeur au moins égale au quart de cette largeur maximale K.

8. Pneu selon l'une des revendications 1 à 7 **caractérisé en ce que** la bande de roulement de ce pneu comprend une pluralité d'éléments de relief (3), au moins un de ces éléments de relief étant pourvu avec au moins une découpure (5) formant sur la surface de roulement deux arêtes, cet élément de relief comprenant une pluralité de cavités (6) formées de part et d'autre de chaque découpure et au voisinage de chaque arête de chaque découpure, et **en ce que** la densité de cavités (6) est plus grande dans la partie médiane de chaque découpure, c'est-à-dire dans la partie centrale de l'élément de relief.

9. Pneu selon l'une des revendications 1 à 8 **caractérisé en ce qu'**au moins une arête (50) d'une découpure (5) comprend un chanfrein (61), ce chanfrein se prolongeant sur la surface de roulement par au moins une cavité (6) destinée à diminuer la rigidité de compression de la bande au voisinage dudit chanfrein.

10. Pneu selon l'une des revendications 1 à 9 **caractérisé en ce que** les éléments de relief sont dépourvus de toute cavité à l'exception du voisinage d'une découpure (5).

## Patentansprüche

1. Reifen mit radialer Karkassenbewehrung überlagert von einem Verstärkungsgürtel, wobei letzterer radial außen von einem Laufstreifen (1) einer Dicke E überlagert wird, wobei dieser Laufstreifen (1) eine Lauffläche hat, um mit einer Straße in Kontakt zu kommen, und mit Rillen (2) einer Tiefe P höchstens gleich der Dicke E des Streifens versehen ist, wobei diese Rillen (2) Reliefelemente (3) begrenzen, wobei jedes Reliefelement eine Kontaktseite (31), die einen Teil der Lauffläche des Streifens formt, und Seitenflächen (30) aufweist, die die Kontaktseite schneiden, um Kanten (32) zu formen, wobei eine Vielzahl dieser Reliefelemente (3) mindestens einen Ausschnitt (5) enthält, der sich auf die Kontaktseite (31) eines Reliefelements öffnet, um Kanten (50) zu formen, die das Element in zwei Teile teilen, wobei dieser Ausschnitt (5) sich im Reliefelement über eine Gesamttiefe H höchstens gleich der Dicke E des Streifens verlängert, wobei dieser Ausschnitt (5) zwischen der Kontaktseite (31) und einer Tiefe H1 höchstens gleich der Gesamttiefe H in Form eines Einschnitts (51) vorliegt, der eine Breite D hat, die geeignet ist, um sich zumindest zum Teil bei üblichen Fahrbedingungen des Reifens schließen zu können, wobei dieser Reifen **dadurch gekennzeichnet ist, dass** in der Nähe jeder Kante jedes Ausschnitts auf der Kontaktseite eine Vielzahl von Hohlräumen (6) geformt ist, die eine im Vergleich mit der Tiefe des Ausschnitts kleine Tiefe h, d.h. höchstens gleich 30% der Tiefe H, haben, wobei diese Hohlräume (6) die Drucksteifigkeit des Reliefelements (3) in der Nähe der mindestens einen Kante (50) verringern, wobei diese Hohlräume so nahe wie möglich an den Kanten geformt sind, d.h. in einem Abstand von jeder Kante höchstens gleich dem Fünffachen der Breite D des Ausschnitts, und dass die Dichte an Hohlräumen (6) in der Nähe jedes Ausschnitts größer ist als im Rest des Reliefelements.

2. Reifen nach Anspruch 1, **dadurch gekennzeichnet, dass** die Tiefe h jedes Hohlraums (6) höchstens gleich 15% der Gesamttiefe H des Ausschnitts (5) ist.

3. Reifen nach Anspruch 1 oder Anspruch 2, **dadurch gekennzeichnet, dass** jeder auf der Kontaktseite geformte Hohlraum (6) eine Kante (66) mit geschlossenem Verlauf hat, und dass eine Vielzahl von Hohlräumen (6) gemäß einer Linie parallel zu dieser Kante angeordnet sind, um dieser Kante so nahe wie möglich zu sein, d.h. in einem Abstand höchstens gleich dem Fünffachen der Breite D des Ausschnitts.

4. Reifen nach Anspruch 1 oder Anspruch 2, **dadurch gekennzeichnet, dass** die Hohlräume (6) die Form einer Vielzahl von parallel zueinander ausgerichteten Rillen haben.

5. Reifen nach Anspruch 4, **dadurch gekennzeichnet, dass** jeder Hohlraum (6) eine parallel zu den Kanten (50) des Ausschnitts (5) ausgerichtete Rille ist.

6. Reifen nach Anspruch 4, **dadurch gekennzeichnet, dass** die Hohlräume (6) die Form einer Vielzahl von Rillen haben, wobei diese Rillen parallel zueinander und so ausgerichtet sind, dass sie einen Winkel von mindestens gleich 45 Grad mit den Kanten (50) des Ausschnitts (5) bilden.

7. Reifen nach einem der Ansprüche 1 bis 6, **dadurch gekennzeichnet, dass** der Ausschnitt (5) die Form eines Einschnitts (51) hat, der sich im Inneren des Streifens durch einen Kanal (52) einer maximalen Breite K verlängert, und dass die Zone, in der die Hohlräume auf jeder Seite des Ausschnitts geformt werden, eine Breite mindestens gleich dem Viertel dieser maximalen Breite K hat.

8. Reifen nach einem der Ansprüche 1 bis 7, **dadurch gekennzeichnet, dass** der Laufstreifen dieses Reifens eine Vielzahl von Reliefelementen (3) enthält, wobei mindestens eines dieser Reliefelemente mit mindestens einem Ausschnitt (5) versehen ist, der auf der Lauffläche zwei Kanten bildet, wobei dieses Reliefelement eine Vielzahl von Hohlräumen (6) enthält, die zu beiden Seiten jedes Ausschnitts und in der Nähe jeder Kante jedes Ausschnitts geformt sind, und dass die Dichte von Hohlräumen (6) im mittleren Teil jedes Ausschnitts, d.h. im zentralen Teil des Reliefelements, größer ist.

9. Reifen nach einem der Ansprüche 1 bis 8, **dadurch gekennzeichnet, dass** mindestens eine Kante (50) eines Ausschnitts (5) eine Abschrägung (61) enthält, wobei diese Abschrägung sich an der Lauffläche durch mindestens einen Hohlraum (6) verlängert, der dazu bestimmt ist, die Drucksteifigkeit des Streifens in der Nähe der Abschrägung zu verringern.

10. Reifen nach einem der Ansprüche 1 bis 9, **dadurch gekennzeichnet, dass** die Reliefelemente außer in der Nähe eines Ausschnitts (5) keinen Hohlraum aufweisen.

## Claims

1. Tyre with radial carcass reinforcement surmounted by a reinforcing belt, the latter being surmounted radially on the outside by a tread (1) of thickness E, this tread (1) having a tread surface to come into contact with a roadway and being provided with grooves (2) of depth P at most equal to the thickness E of the tread, these grooves (2) delimiting raised elements (3), each raised element comprising a contact face (31) forming a part of the tread surface and lateral faces (30) intersecting the contact face to form edge corners (32), a plurality of these raised elements (3) comprising at least one cut (5) opening onto the contact face (31) of a raised element to form edge corners (50), this cut (5) extending into the raised element over a total depth H at most equal to the thickness E of the tread, this cut (5) being, between the contact face (31) and a depth H1 at most equal to the total depth H, in the form of a sipe (51) having a width D suitable for being able to close up at least in part under normal running conditions of the tyre, this tyre being **characterized in that**, there is formed a plurality of cavities (6) on the contact face having a depth h that is small in comparison with the depth of the cut, i.e. that is at most equal to 30% of the depth H, these cavities (6) reducing the compression rigidity of the raised element (3) in the vicinity of the said at least one edge corner (50), this cavity being formed as close as possible to an edge corner, i.e. at a distance from the said edge corner that is at most equal to five times the width D of the cut and **in that** the density of cavities (6) is greater close to the cut (5) than in the remain of the raised element.

2. Tyre according to Claim 1, **characterized in that** the depth h of each cavity (6) is at most equal to 15% of the total height H of the cut (5).

3. Tyre according to Claim 1 or to claim 2, **characterized in that** each cavity (6) formed on the contact face has an edge corner (66) of closed outline, and **in that** a plurality of cavities (6) are arranged along a line parallel to this edge corner so as to be as close as possible to this edge corner, i.e. a distance at most equal to five times the width D away from the cut.

4. Tyre according to Claim 1 or to claim 2, **characterized in that** the cavities (6) have the form of a plurality of grooves running parallel to one another.

5. Tyre according to Claim 4, **characterized in that** each cavity (6) is a groove running parallel to the edge corners (50) of the cut (5).

6. Tyre according to Claim 4, **characterized in that** the cavities (6) have the form of a plurality of grooves, these grooves running parallel to one another and in such a way as to make an angle of at least 45° with the edge corners (50) of the cut (5).

7. Tyre according to one of Claims 1 to 6, **characterized in that** the cut (5) has the form of a sipe (51) extending into the tread via a channel (52) of maximum width K, and **in that** the region in which the cavities are formed on each side of the cut has a width at least equal to one quarter of this maximum width K.

8. Tyre according to one of Claims 1 to 7, **characterized in that** the tread of this tyre comprises a plurality of raised elements (3), at least one of these raised elements being provided with at least one cut (5) which on the tread surface forms two edge corners, this raised element comprising a plurality of cavities (6) formed on each side of each cut and in the vicinity of each edge corner of each cut, and **in that** the density of cavities (6) is greater in the middle part of each cut, i.e. in the central part of the raised element.

9. Tyre according to one of Claims 1 to 8, **characterized in that** at least one edge corner (50) of a cut (5) has a chamfer (61), this chamfer extending over the tread surface in the form of at least one cavity (6) intended to reduce the compression rigidity of the tread in the vicinity of the said chamfer.

10. Tyre according to one of Claims 1 to 9, **characterized in that** the raised elements (3) are devoid of any cavity except close to the cut (5).
